# EUROPEAN PATENT APPLICATION

(11) **EP 1 434 191 A2**
(43) Date of publication of application: **30.06.2004**
(21) Application number: 03255343.0
(22) Date of filing: 28.08.2003
(51) Int. Cl.: G09G 3/28

(54) **Method for driving plasma display panel, and plasma display device**

(30) Priority: 27.12.2002 JP 2002382148
(71) Applicant: Fujitsu Hitachi Plasma Display Limited, Kawasaki-shi, Kanagawa 213-0012 (JP)
(72) Inventor: Ohira, Koji c/o Fujitsu Hitachi Plasma Display Ltd, Kawasaki-shi Kanagawa 213-0012 (JP); Hidaka, Souichirou Fujitsu Hitachi Plasma Display, Kawasaki-shi Kanagawa 213-0012 (JP)
(74) Representative: Williams, Michael Ian

(57) **Abstract**

A method for driving a plasma display panel is provided in which abrupt variation in brightness of additional images is eliminated; thereby ensuring that quality of display is enhanced, the additional images being displayed adjacently to a picture for aspect ratio conversion. The method includes the step of replacing one frame with first sub-frames for lighting only an area other than a part of a screen and a second sub-frame for lighting only a section of the screen other than the area when the area is used to display a picture having an aspect ratio different from that of the screen, and controlling luminance in the first sub-frames and luminance in the second sub-frame independently of each other.

## Description

The present invention relates to a method for driving a plasma display panel (PDP), and a plasma display device. The present invention is applied to picture display when aspect ratio conversion is performed.

Generally, a plasma display device commercially available as a television set has a screen with a 16:9 aspect ratio that is suitable for displaying high-definition pictures. Displayed on this screen are 4:3 aspect ratio pictures that are common in terrestrial broadcasting or computer output in addition to 16:9 aspect ratio pictures in widescreen television sets.

Methods for aspect ratio conversion include a letterbox format and a side panel format, the aspect ratio conversion being performed when a picture whose aspect ratio differs from that of a screen is displayed. The letterbox is a format in which images generally referred to as black bands are added to the top and bottom of a picture. The letterbox format is adopted, for example, when a 16:9 aspect ratio picture is displayed on a 4:3 aspect ratio screen. The side panel is a format in which the black bands are added to the left and right of a picture. The side panel format is adopted, for example, when a 4:3 aspect ratio picture is displayed on a 16:9 aspect ratio screen.

The black bands include a uniform image with a color other than black, as typified by blue, and an arbitrary pattern in addition to a black uniform image. These black bands are referred to as "additional images" in the disclosure. An eye-friendly additional image is an image with proper brightness. The additional image is made an image with proper brightness, which reduces the luminance difference between a picture area and an additional image area on a screen to minimize burn-in.

Japanese unexamined patent publication No. 10-222125 discloses a plasma display device in which brightness of additional images is changed in response to change in brightness of a picture in order to prevent viewers from perceiving that the additional images are excessively bright when a picture is dark. However, it is difficult to realize natural changes. Therefore, no control for changing brightness of additional images intentionally is carried out in general plasma display devices available in the market.

The conventional plasma display devices have a problem in that brightness of additional images subtly changes under the influence of APC (Auto Power Control), making display unnatural. The APC is control for preventing excessive power consumption while achieving bright and clear display, and is essential especially for a plasma display device with a large screen. The APC allows light emission amount in each cell to be changed in response to variations in a display load ratio to prevent power consumption in the entire screen from exceeding the set value. The display load ratio is an index of power necessary for displaying a certain scene and is defined as an average value of all cells having a ratio G/Gmax of gradation G (0≦G≦Gmax) to be displayed in each cell in one frame to maximum gradation Gmax. Stated differently, the display load ratio is a specific value indicating brightness in the entire screen in display of one frame. The APC is outlined as follows: The brighter an image (a frame) to be displayed generally, the smaller light emission amount in each cell. Overall bright display makes low amount of light emission in each cell inconspicuous.

### Related Patent Publication 1:

### Japanese unexamined patent publication No. 10-222125

It is desirable to eliminate abrupt variation in brightness of additional images displayed adjacently to a picture for aspect ratio conversion, thereby ensuring that quality of display is enhanced.

According to one aspect of the present invention, display of a picture and display of additional images are separated in the time scale, the additional images being adjacent to the picture for aspect ratio conversion. Then, luminance in the display of additional images is controlled independently of luminance in the display of a picture. Regarding the display of additional images, display periods are not necessarily assigned to each frame and additional images may be displayed at a rate of at least once per fixed number of frames, the fixed number being predetermined and two or more. A frame to which display periods of an additional image are assigned includes first sub-frames for lighting only a picture area in a screen and at least one of second sub-frame for lighting only additional image areas in the screen.

These and other characteristics and objects of the present invention will become more apparent by the following descriptions of preferred embodiments with reference to the accompanying drawings, in which:
Fig. 1 is a block diagram of a plasma display device according to an embodiment of the present invention.
Figs. 2A and 2B are views showing display formats.
Fig. 3 shows a functional structure of a data processing circuit.
Fig. 4 is a conceptual diagram of frame division in display of a full screen format.
Fig. 5 is a conceptual diagram of basic frame division in display of a side panel format.
Fig. 6 is a schematic diagram of drive voltage waveforms according to a basic drive sequence.
Fig. 7 shows a first example of modification of drive voltage waveforms suitable for a second sub-frame.
Fig. 8 shows a second example of modification of drive voltage waveforms suitable for the second sub-frame.
Fig. 9 shows modification of a structure of the data processing circuit.
Fig. 10 shows modification of frame division in the display of the side panel format.

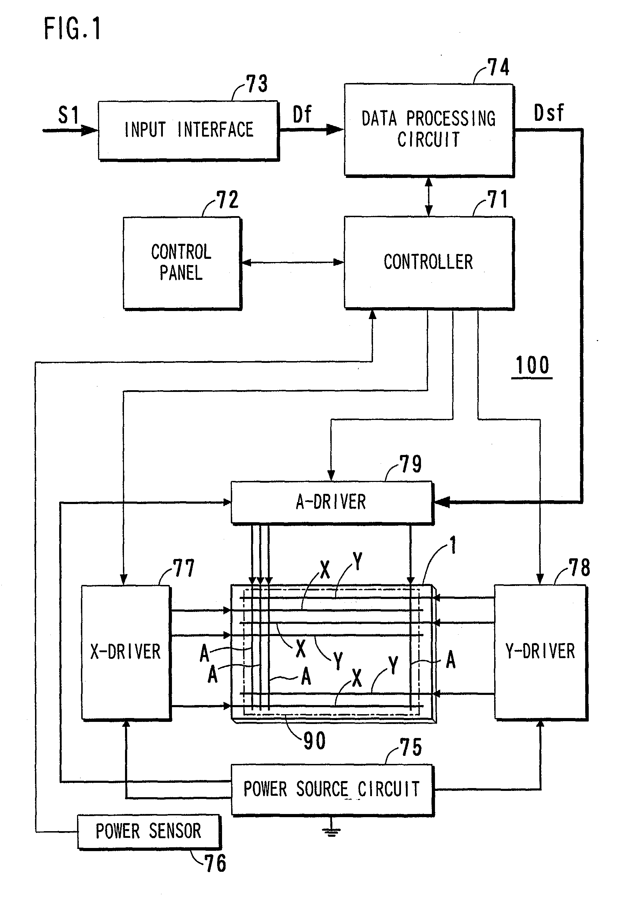

Fig. 1 is a block diagram of a plasma display device according to an embodiment of the present invention. The illustrated plasma display device 100 includes an AC-type plasma display panel 1, a controller 71, a control panel 72, an input interface 73, a data processing circuit 74, a power source circuit 75, a power sensor 76, an X-driver 77, a Y-driver 78 and an A-driver 79.

The plasma display panel 1 includes a screen 90 having cells with a three-electrode surface discharge structure in which electrodes are arranged in a matrix, the screen being available for color display. The aspect ratio of the screen 90 is 16:9. On the screen 90 are arranged electrodes X and electrodes Y as row electrodes and electrodes A as column electrodes. The electrodes X and the electrodes Y make electrode pairs for generating display discharge for each row in the matrix display, and the electrodes Y and the electrodes A make an electrode matrix for selecting cells. The potential of the electrodes X, the electrodes Y and the electrodes A depend on switching operations of the X-driver 77, the Y-driver 78 and the A-driver 79, respectively, each of the drivers being connected to the power source circuit 75.

The controller 71 takes charge of control related to drive of the plasma display panel 1. The controller 71 is supplied with various signals from the control panel 72 and the power sensor 76. The power sensor 76 is an element for APC (Auto Power Control) and serves to detect actual power consumption of the plasma display panel 1.

The input interface 73 performs analog-to-digital conversion and γ correction with respect to a color picture signal S1 input from a picture signal source such as a television tuner or a computer together with synchronization signals. Then, the input interface 73 outputs frame data Df that are multi-valued image data obtained by the analog-to-digital conversion and the γ correction to the data processing circuit 74. The data processing circuit 74 converts the frame data Df into sub-frame data Dsf for reproducing gradations by combination of binary images. The sub-frame data Dsf are transmitted to the A-driver 79 in line with progress of display, and are used as control data for an addressing operation in which amount of wall charge in a cell is caused to correspond to necessity or not of light emission.

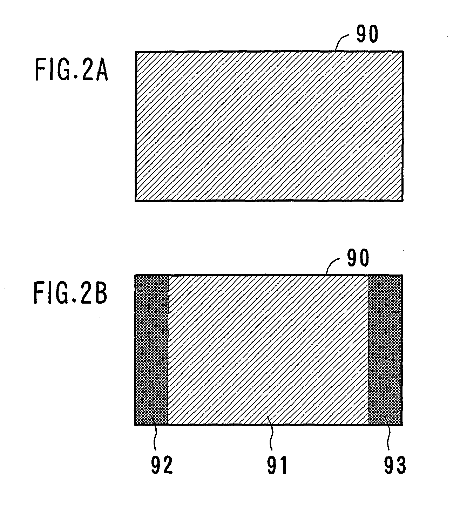

Figs. 2A and 2B are views showing display formats. The display using the plasma display device 100 includes a full screen format in which the whole of the screen 90 is used to display pictures as shown in Fig. 2A, and a side panel format in which neither left nor right end of the screen 90 is used to display pictures as shown in Fig. 2B. The full screen format display shown in Fig. 2A is applied to the case where a picture to be input as a display object has an aspect ratio of 16:9 which is the same as that of the screen 90. In the full screen format display, the whole of the screen 90 is a picture area. Meanwhile, the side panel format display shown in Fig. 2B is applied to the case where a picture to be input as a display object is longer than the screen 90 in the vertical direction, for example, the case where a picture has an aspect ratio of 4:3. In the side panel format display, the screen 90 is divided into a picture area 91 used for displaying pictures and two additional image areas 92 and 93 not used for displaying pictures. In the plasma display device 100, the additional image areas 92 and 93 are used for displaying additional images other than black uniform images, the additional images having proper brightness.

The plasma display device 100 has a function of displaying pictures in a letterbox format in which the top and bottom ends of the screen 90 are made additional image areas when a picture to be input as a display object is longer than the screen 90 in the horizontal direction, like a Cinemascope size (an aspect ratio is 2.35:1).

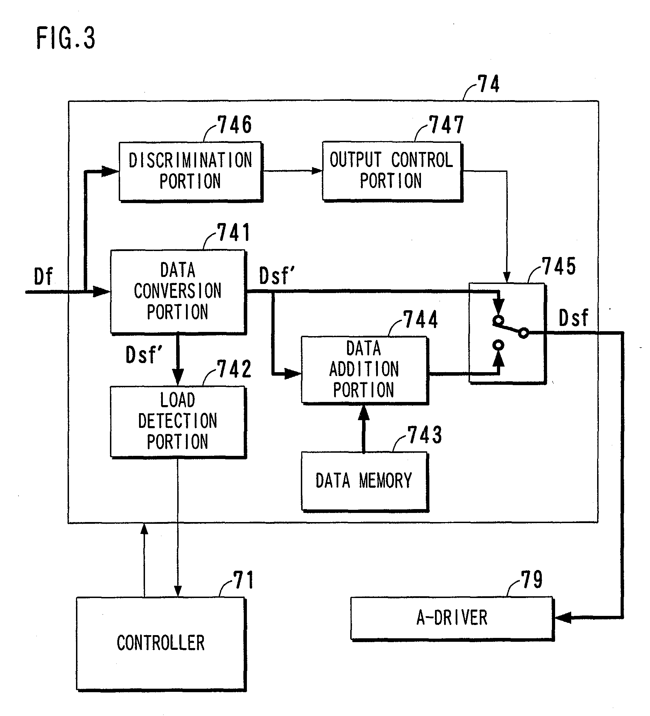

Fig. 3 shows a functional structure of the data processing circuit. The data processing circuit 74 includes a data conversion portion 741, a load detection portion 742, a data memory 743, a data addition portion 744, a data selector 745, a discrimination portion 746 and an output control portion 747.

The data conversion portion 741 converts the frame data Df into sub-frame data Dsf'. In the case of the full screen format display, the sub-frame data Dsf' correspond to the sub-frame data Dsf. In the case of the side panel format display, the sub-frame data Dsf' correspond to a part equivalent to the picture area in the sub-frame data Dsf. Based on such sub-frame data Dsf', the load detection portion 742 counts the number of cells to be lighted for each sub-frame to notify the controller 71 mentioned above of the counted value. The counted value is used for APC.

On the data memory 743 are stored additional image data to be displayed adjacently to pictures for aspect ratio conversion. The data addition portion 744 couples the additional image data read out of the data memory 743 to the sub-frame data Dsf'. In other words, pictures and additional images are combined in the data addition portion 744.

The discrimination portion 746 discriminates aspect ratios of pictures based on the frame data Df and the synchronization signals. In accordance with the result, the output control portion 747 controls the operation of the data selector 745. If a picture has an aspect ratio of 16:9, for example, the sub-frame data Dsf' are sent to the A-driver 79 as the sub-frame data Dsf. In this case, the picture is displayed in the full screen format. Further, if a picture has an aspect ratio of 4:3, for example, the data generated in the data addition portion 744 are sent to the A-driver 79 as the sub-frame data Dsf. In this case, the picture is displayed in the side panel format.

A drive sequence of the plasma display panel 1 in the display device 100 mentioned above is outlined as follows. In the display using the plasma display panel 1, frames input at regular intervals are individually divided into plural sub-frames so that color display is performed by lighting control in a binary manner. Stated differently, one frame is replaced with a set of sub-frames. In the case of interlaced display, fields constituting one frame are individually divided into subfields.

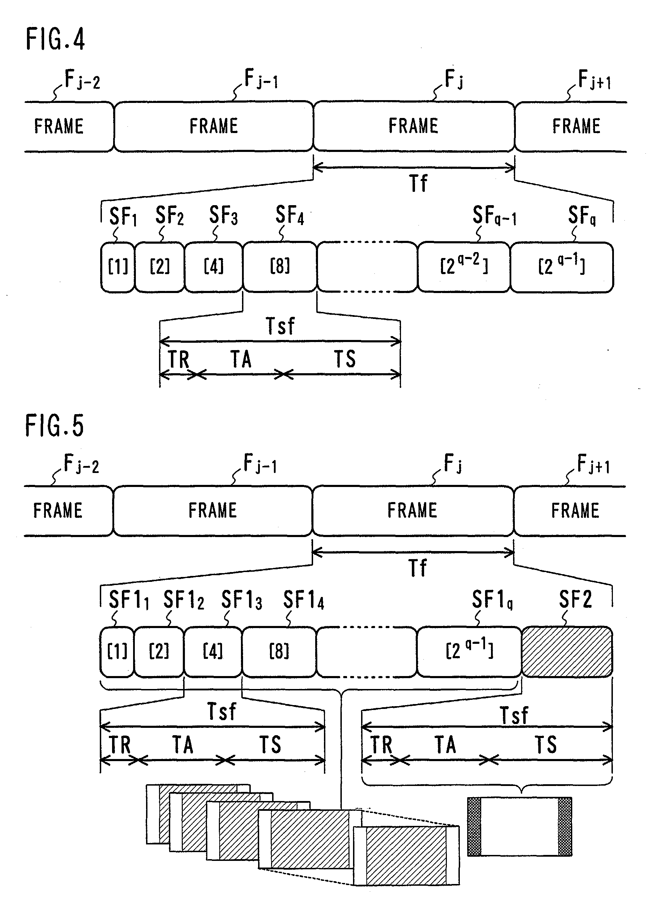

Fig. 4 is a conceptual diagram of frame division in the full screen format display. Suffixes of reference characters in the drawing represent display order. In the case of the full screen format, a drive sequence similar to the conventional method is applied. More specifically, luminance weights are added to plural sub-frames SF₁, SF₂, SF₃, SF₄, ···, SF_{q-1} and SF_{q} (hereinafter these sub-frames are generically referred to as sub-frames SF) constituting each frame F to determine the number of times of display discharge in each of the sub-frames SF. In accordance with this frame structure, a frame period Tf as a frame transmission period is divided into sub-frames SF and one sub-frame period Tsf is assigned to each of the sub-frames SF. Further, each of the sub-frame periods Tsf is divided into a reset period TR, an address period TA and a display period TS. The lengths of the reset period TR and the address period TA are constant irrespective of the weight. On the contrary, the length of the display period TS is longer for a larger weight. Accordingly, the length of the sub-frame period Tsf becomes also longer as the weight of the corresponding sub-frame SF is larger. The order of the reset period TR, the address period TA and the display period TS is common to all of the sub-frames SF. Initialization of wall charge, an addressing operation and a sustaining operation are carried out for each sub-frame.

Fig. 5 is a conceptual diagram of basic frame division in the side panel format display. Suffixes of reference characters in the drawing represent display order. In the case of the side panel format, a drive sequence specific to the present invention is applied. More specifically, frames F input at regular intervals are individually divided into first sub-frames SF1₁, SF1₂, SF1₃, SF1₄, ··· and SF1_{q} (hereinafter these reference characters are abbreviated as SF1) and a second sub-frame SF2, the number of second sub-frames SF2 being at least one. The first sub-frames SF1 are binary images in which only the picture area 91 shown in Fig. 2B is lighted, while the second sub-frame SF2 is a binary image in which only the additional image areas 92 and 93 are lighted. Since gradation reproduction is required for the first sub-frames SF1, luminance weights are added similarly to the case of the full screen format. Regarding the second sub-frame SF2, luminance is so set that the additional images have appropriate brightness. Then, the sub-frame period Tsf including the reset period TR, the address period TA and the display period TS is assigned to each of the first sub-frames SF1 and the second sub-frame SF2.

The structure of the frame F by the first sub-frames SF1 and the second sub-frame SF2 causes separation of display of pictures and display of additional images in a time scale, and allows for independent control of luminance of cells in the picture area 91 and luminance of cells in the additional image areas 92 and 93. In the side panel format display, the plasma display device 100 sets only the first sub-frames SF1 as a target for APC and does not change luminance in the second sub-frame SF2 regardless of contents of the frame F. On the occasion of APC for the first sub-frames SF1, luminance of display in the first sub-frames SF1 is so adjusted that power consumption due to display of the frame F avoids exceeding the set value, the power consumption including the known power consumption due to display of the second sub-frame SF2.

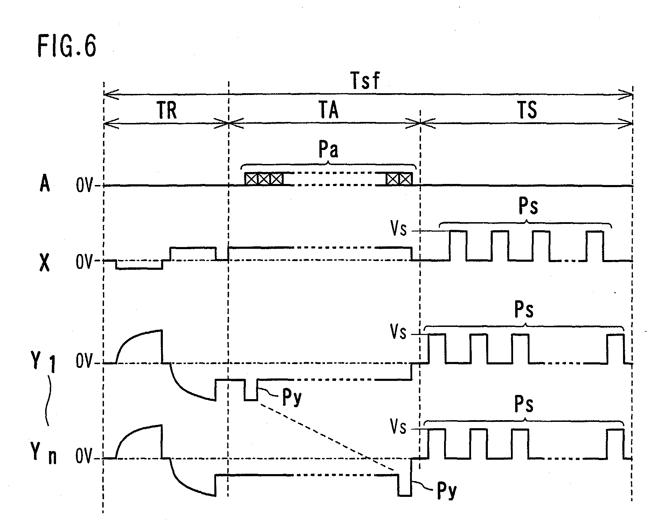

Fig. 6 is a schematic diagram of drive voltage waveforms according to a basic drive sequence. Suffixes (1, n) of reference characters of the electrodes Y in the drawing represent display order. The illustrated waveforms are one example and amplitude, polarity and timing can be variously changed.

During the reset period TR in each of the sub-frames, rectangular pulses having negative polarity and positive polarity are applied sequentially to all of the electrodes X, and obtuse waveform pulses having positive polarity and negative polarity are applied sequentially to all of the electrodes Y. The pulse application to an electrode means that the electrode is temporarily biased. To cells is supplied combined voltage that is a total sum of the amplitude of pulses applied to the electrodes X and Y. The microdischarge occurring at the first pulse application generates appropriate wall charge having the same polarity in all cells irrespective of lighted or non-lighted in the previous sub-frame. The microdischarge occurring at the second pulse application regulates the wall charge at a value corresponding to the difference between the discharge start voltage and the amplitude of the applied voltage. This two-step initialization process compensates variations in the discharge start voltage among cells, thereby ensuring that addressing reliability is enhanced.

During the address period TA, wall charge necessary for a sustaining operation is accumulated in the cells to be lighted. With all of the electrodes X and all of the electrodes Y being biased at a predetermined potential, a scan pulse PY is applied to one electrode Y corresponding to the selected row for every row selection period (every scanning time of one row). At the same time with this row selection, an address pulse Pa is applied only to the address electrodes A corresponding to selected cells in which address discharge should be generated. Stated differently, potential of the address electrodes A is controlled in a binary manner in accordance with the sub-frame data Dsf of the selected row. In the selected cells, discharge occurs between the electrode Y and the electrode A, which causes discharge between the electrode X and the electrode Y. This series of discharge is address discharge.

During the display period TS, a display pulse (also called a sustaining pulse) Ps is applied to the electrode Y and the electrode X alternately. Thereby, a pulse train having alternating polarity is applied to cells. The application of the display pulse Ps causes display discharge in cells where predetermined amount of wall charge remains. The number of times of application of the display pulse Ps corresponds only to the weight of the sub-frame, and is regulated depending on the display load ratio in APC.

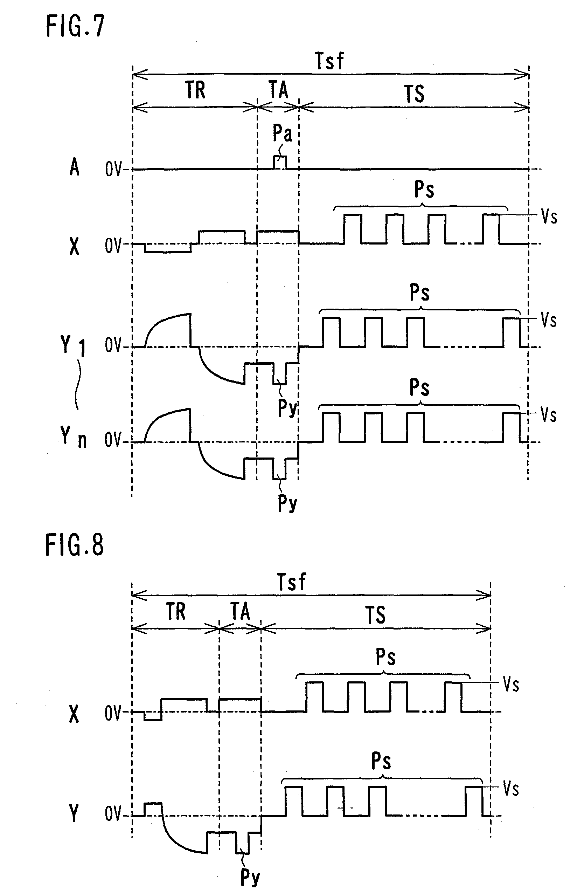

Fig. 7 shows a first example of modification of drive voltage waveforms suitable for the second sub-frame. The illustrated waveforms are characterized in that a scan pulse Py is applied to all of the electrodes Y at one time during the address period TA. In the second sub-frame, only the additional image areas are lighted and cells to be lighted are previously determined. The same lighting pattern in neighboring rows allows for a simultaneous addressing operation for the rows. The simultaneous addressing operation for plural rows shortens time required for the addressing operation in the entire screen, compared to the case of a sequential addressing operation for each row. When images displayed in the additional image areas are monochromatic or a vertical striped pattern, the lighting pattern is the same among all of the rows. In this case, the drive waveforms shown in Fig. 7 are applied to display for the second sub-frame, leading to the shortest time required for the addressing operation.

Fig. 8 shows a second example of modification of drive voltage waveforms suitable for the second sub-frame. The illustrated waveforms are characterized in that control of wall charge is simplified in the reset period TR. Since no cells in the additional image areas are lighted in the first sub-frame, there is little difference between amount of wall charge generated in lighted cells and that generated in non-lighted cells at the starting point of the reset period TA in the second sub-frame. Accordingly, application of only an obtuse waveform pulse enables an addressing operation with sufficiently high reliability, the obtuse waveform pulse corresponding to the latter half of the two-step pulse application performed in the first sub-frame. This simplification shortens the reset period TR. Regarding the second sub-frame, the very reset period TR can be omitted and further the sub-frame period Tf can also be shortened.

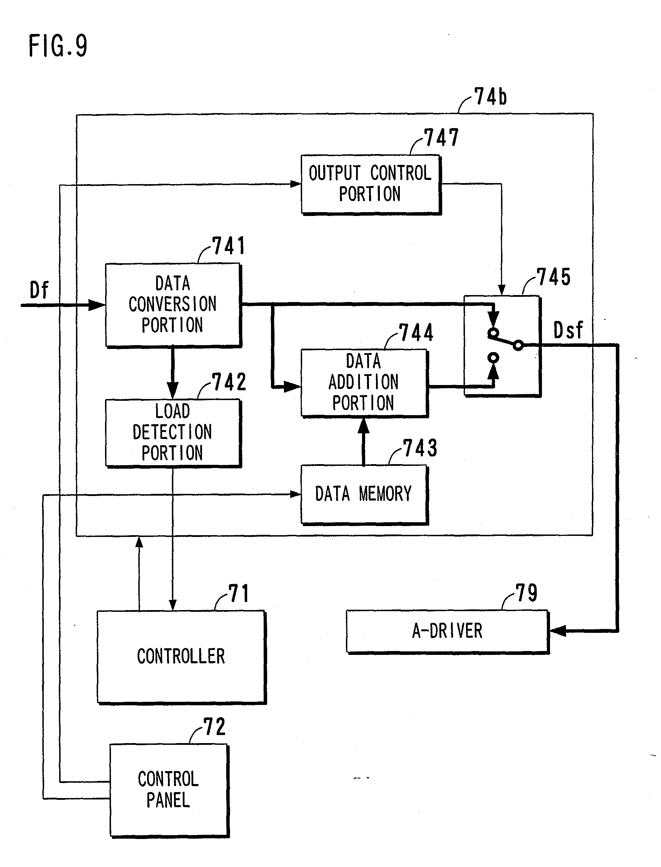

Fig. 9 shows modification of the structure of the data processing circuit. In the modified data processing circuit 74b, the data memory 743 and the output control portion 747 are operated in accordance with operation signals input from the control panel 72. A user of the plasma display device 100 can designate the display format and the display contents in the additional image areas. According to the user's instructions, the plasma display device 100 serves to change the display order of the first sub-frame and the second sub-frame and to arrange the additional image area on one side of the picture area instead of arranging the same on both sides of the picture area.

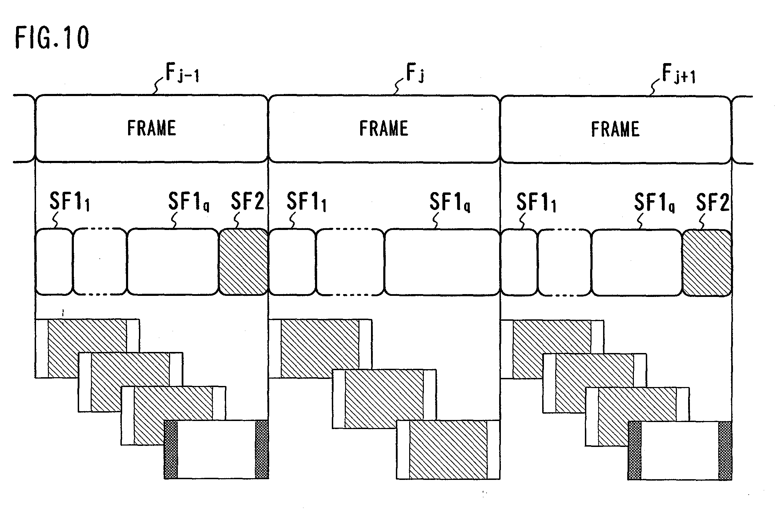

Fig. 10 shows modification of frame division in the side panel format display. The additional image areas are lighted not for every frame but for every fixed number of frames. Frames in which no additional image areas are lighted have longer time assignable for picture display, compared to frames in which the additional image areas are lighted. This facilitates the following improvements: Luminance enhancement due to increase in the number of display pulses, or enhancement of gradation reproduction due to increase in the number of sub-frames.

In the embodiments described above, the number of display pulses, which determines the luminance of the second dub-frame SF2, may be changed depending on brightness of a picture. When the luminance level of the additional image areas 92 and 93 is set to a relatively high level, a problem arises that a viewer senses additional images excessively bright in the case of a dark picture. The problem is solved by changing the luminance of the additional images. Optimization of luminance control of additional images is required in order to prevent that the luminance change disturbs viewers.

While the presently preferred embodiments of the present invention have been shown and described, it will be understood that the present invention is not limited thereto, and that various changes and modifications may be made by those skilled in the art without departing from the scope of the invention as set forth in the appended claims.

## Claims

1. A method for driving a plasma display panel in which one frame is replaced with a plurality of sub-frames for display, the method comprising:
replacing one frame with first sub-frames for lighting only an area other than a part of a screen and a second sub-frame for lighting only a section of the screen other than the area when the area is used to display a picture having an aspect ratio different from that of the screen; and
controlling luminance in the first sub-frames and luminance in the second sub-frame independently of each other.

2. The method according to claim 1, wherein amount of light emission of each cell in display of the second sub-frame is fixed and amount of light emission of each cell in display of the first sub-frames is adjusted depending on variation in brightness of a picture so that power consumption of the plasma display panel avoids exceeding a set value.

3. The method according to claim 1 or 2, further comprising:
assigning a reset period for equalizing wall charge in a plurality of cells, an address period for associating the wall charge in each of the cells with display data and a display period for generating display discharge to the second sub-frame and each of the first sub-frames; and
making the reset period in the second sub-frame shorter than the reset period in each of the first sub-frames.

4. The method according to claim 1, 2 or 3, further comprising:
assigning a reset period for equalizing wall charge in a plurality of cells, an address period for associating the wall charge in each of the cells with display data and a display period for generating display discharge to each of the first sub-frames; and
assigning the address period for associating the wall charge in each of the cells with the display data and the display period for generating the display discharge to the second sub-frame.

5. The method according to claim 1, 2, 3 or 4, further comprising:
assigning an address period for associating wall charge in each cell with display data and a display period for generating display discharge to the second sub-frame and each of the first sub-frames; and
generating address discharge in a plurality of rows simultaneously during the address period in the second sub-frame.

6. The method according to claim 1, 2, 3, 4 or 5, wherein amount of light emission of each cell in display of the second sub-frame is adjusted depending on variation in brightness of a picture.

7. A method for driving a plasma display panel in which one frame is replaced with a plurality of sub-frames for display, the method comprising:
replacing a frame selected in accordance with a set rule with first sub-frames for lighting only an area other than a part of a screen and a second sub-frame for lighting only a section of the screen other than the area when the area is used to display a picture having an aspect ratio different from that of the screen;
replacing unselected frames with the first sub-frames; and
controlling luminance in the first sub-frames and luminance in the second sub-frame independently of each other.

8. The method according to claim 7, wherein amount of light emission of each cell in display of the second sub-frame is fixed and amount of light emission of each cell in display of the first sub-frames is adjusted depending on variation in brightness of a picture so that power consumption of the plasma display panel avoids exceeding a set value.

9. The method according to claim 7 or 8, further comprising:
assigning a reset period for equalizing wall charge in a plurality of cells, an address period for associating the wall charge in each of the cells with display data and a display period for generating display discharge to the second sub-frame and each of the first sub-frames; and
making the reset period in the second sub-frame shorter than the reset period in each of the first sub-frames.

10. The method according to claim 7, 8 or 9, further comprising:
assigning a reset period for equalizing wall charge in a plurality of cells, an address period for associating the wall charge in each of the cells with display data and a display period for generating display discharge to each of the first sub-frames; and
assigning the address period for associating the wall charge in each of the cells with the display data and the display period for generating the display discharge to the second sub-frame.

11. The method according to claim 7, 8, 9 or 10, further comprising:
assigning an address period for associating wall charge in each cell with display data and a display period for generating display discharge to the second sub-frame and each of the first sub-frames; and
generating address discharge in a plurality of rows simultaneously during the address period in the second sub-frame.

12. The method according to claim 7, 8, 9, 10 or 11, wherein amount of light emission of each cell in display of the second sub-frame is adjusted depending on variation in brightness of a picture.

13. A plasma display device for replacing one frame with a plurality of sub-frames to display, the device comprising:
a data processing circuit for replacing one frame with first sub-frames for lighting only an area other than a part of a screen and a second sub-frame for lighting only a section of the screen other than the area when the area is used to display a picture having an aspect ratio different from that of the screen; and
a controller for controlling luminance in the first sub-frames and luminance in the second sub-frame independently of each other.

14. A plasma display device for replacing one frame with a plurality of sub-frames to display, the device comprising:
a data processing circuit for replacing a frame selected in accordance with a set rule with first sub-frames for lighting only an area other than a part of a screen and a second sub-frame for lighting only a section of the screen other than the area when the area is used to display a picture having an aspect ratio different from that of the screen, and for replacing unselected frames with the first sub-frames; and
a controller for controlling luminance in the first sub-frames and luminance in the second sub-frame independently of each other.
